Europäisches Patentamt

**European Patent Office**

Office européen des brevets

(19)

(11) Publication number : **0 390 265 B1**

(12) **EUROPEAN PATENT SPECIFICATION**

(45) Date of publication of patent specification :
**01.12.93 Bulletin 93/48**

(51) Int. Cl.⁵ : **C02F 9/00,** C02F 3/32,
C02F 1/72, C02F 3/28,
C02F 1/58

(21) Application number : **90200682.4**

(22) Date of filing : **22.03.90**

(54) **Process for purifying waste waters constituted by civil, industrial, agroalimentary, and zootechnical waste waters, and facility for practicing it.**

(30) Priority : **30.03.89 IT 1994989**

(43) Date of publication of application :
**03.10.90 Bulletin 90/40**

(45) Publication of the grant of the patent :
**01.12.93 Bulletin 93/48**

(84) Designated Contracting States :
**AT BE CH DE DK ES FR GB GR LI LU NL SE**

(56) References cited :
**EP-A- 0 175 568**
**AT-A- 315 762**
**DE-B- 1 246 598**

(56) References cited :
**DE INGENIEUR, vol. 100, no. 1, January 1988, page 49, Royal Institute of Engineers, Misset B.V., Doetinchem NL; P. DE JAEGER:** "Rozen bloeien op rioolwater"
**CHEMICAL ABSTRACTS, vol. 98, no. 4, 24th January 1983, page 319, abstract no. 22006g, Columbus, Ohio, US; M.I. ROGOVIK et al.:** "Purification of water deposits by natural zeolite"

(73) Proprietor : **Bonaventura, Vincenzo**
**Via Verdi 30**
**I-21020 Morosolo Casciago, Varese (IT)**

(72) Inventor : **Bonaventura, Vincenzo**
**Via Verdi 30**
**I-21020 Morosolo Casciago, Varese (IT)**

(74) Representative : **Appoloni, Romano et al**
**ING. BARZANO' & ZANARDO MILANO S.p.A.**
**Via Borgonuovo 10**
**I-20121 Milano (IT)**

EP 0 390 265 B1

## Description

The present invention relates to a process for purifying the waste waters constituted by civil waste waters, industrial waste waters - in particular from agroalimentary industries -, zootechnical waste waters, or mixed waste waters. DE-A-1 246 598 discloses a waste water treatment comprising an oxidation with air using lava slag and pebbles as mechanical filters together with a phytopurification. AT-A-315 762 discloses a phytopurification with plants such as Iris, Scirpus, Phragmites for purifying sewer water drain. The purposes which the process according to the present invention aims at achieving are essentially the following:
- availability of purified waters having such physical, chemical and biological characteristics as to enable them to be used again in determined productive cycles or in auxiliary sections to said productive cycles;
- use of said reclaimed waste waters in agriculture;
- their disposal in compliance with the applicable laws and regulations by being discharged into the various receiver bodies as defined by the laws in force, and in particular their discharge into surface water bodies (water courses, lakes,sea, and so forth) without causing phenomena of eutrophication, thanks to the drastic decrease in nourishing substances and algal growth stimulators;
- decrease in energy consumptions;
- reduction in the consumptions of the reactants for phosphates and nitrates removal, or for further reactions of purification of said waste waters;
- elimination of heavy metals and of the consequent costs of dehydration of the precipitates, conditioning and disposal of the resulting sludges;
- recovery and re-use of the polluting substances removed from waste waters.

In order to achieve surch purposes, and still other advantages which will be clear from the following disclosure, the present invention proposes a process for purifying the waste waters constituted by civil, industrial, agroalimentary, and zootechnical waste waters, characterized in that it comprises the following steps, in succession:
(a) anaerobial fermentation of said waste waters;
(b) oxidation of said waste waters with oxygen in the presence of a catalyst;
(c) phytopurification by causing said waste waters to flow through the interior of one or more cell(s) inside which plants are contained, which are not completely under the surface of the stream of waste waters flowing through said cell(s), but at least partially emerge from said stream;
(d) filtration of said waste waters in the presence of zeolite.

According to the above (c) step, the waste waters undergo a purification owing to the contact with plants, with said contact taking place owing to the flowing of a stream of waste waters into contact with, and half-bathing of, the plants, with the expression "half-bathing of the plants" having to be understood herein in the meaning that the plants contained in the contact region retain at least one portion exposed to atmospheric air, emerging from, and not bathed in, the flowing stream of waste waters.

Such plants according to the invention are selected from among the non-infesting shrubby vegetable species provided with a rhizoma or a root apparatus, for example selected from among the following: Iris, Typhaceae, Scirpus, Phragmites, either as individual species, or in association with one another.

When they contain organic substances, said waste waters are submitted to an anaerobial fermentation, with the methane generated during said fermentation being possibly recovered.

A further form of practical embodiment of the process comprises a further step, to be carried out prior to said (a) step, consisting in that waste waters with a high ammonia concentration are treated with a reactant capable of displacing said ammonia, such as, e.g., calcium hydroxide.

In said (b) step of oxidation of the waste waters with oxygen, the catalyst is selected from among the zeolites, and preferably is clinoptilolite.

In said (d) step of filtration, said zeolite is preferably selected from among the following: phillipsite, clinoptilolite, in the presence of multilayer filters consisting of Layers of other substances, such as celite, dicalite, activated charcoal.

In order to better understand the characteristics and the advantages of the instant invention, a non-limitative example of practical embodiment thereof is disclosed in the following by referring to the figures of the hereto attached drawing tables.

Figure 1 shows a flow diagram in the form of a block diagram of a process and facility according to the present invention.

Figure 2 schematically shows a plan view of a phytopurification cell belonging to the facility of Figure 1.

Figure 3 shows a sectional view taken along path III-III of Figure 2.

Figure 4 shows a sectional view taken along path IV-IV of Fig. 2.

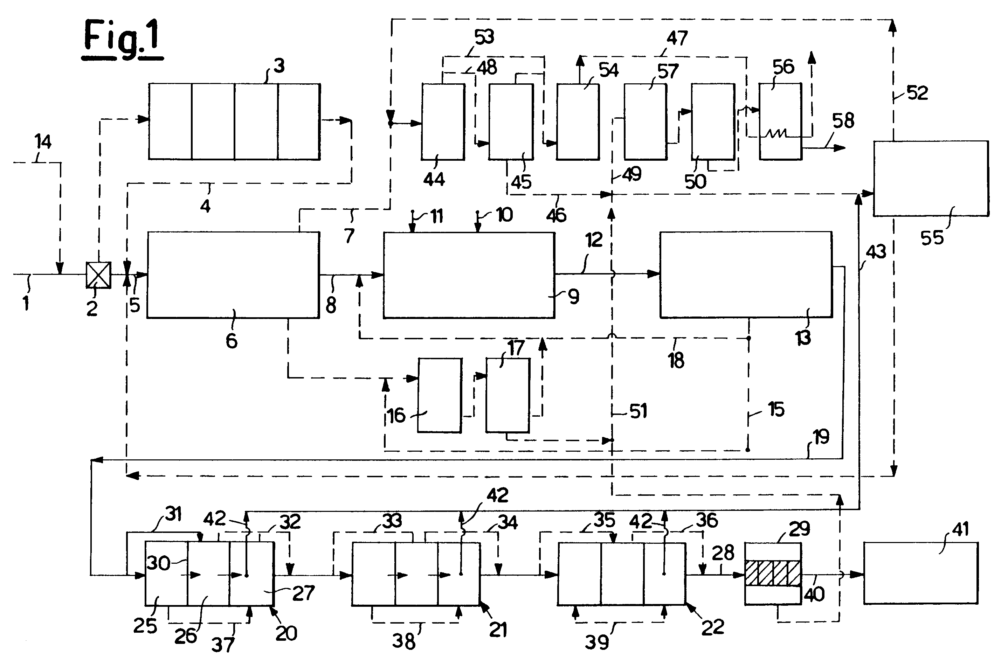

Referring to Figure 1, waste waters 1 suitable for being treated according to the process of the present invention are fed to a control station 2, possibly after the addition of waters 14 coming from the condensation system. From the control station 2, should they contain anomalous liquors, such as to require a pretreatment, said waste waters are sent to a step 3 wherein oily pollutants are removed from said waste waters, the pH of the waste waters is adjusted, and said waste waters are caused to settle.

Should they contain organic components, and high ammonia concentrations, said waste waters are then fed through the lines 4 and 5 to a step 6 of anaerobial fermentation and ammonia displacement. Such a step 6 is advantageously constituted by two sections in cascade. In the first section of the step 6, ammonia is displaced by means of $Ca(OH)_2$ and mechanical stirring. The so formed ammonium ion is linked by a mass of zeolites. In the second section of the step 6, the waste waters are submitted to an anaerobial fermentation with specific bacteria.

In the step 6 a biogas 7 is produced, which is fed to the step 44 of dehydration, and then, either through 48 to a step 45 of ammonia adsorption, or through 53 to a step 54 of biogas burning. If the step 45 is used, the ammonia adsorption mass is sent through a line 46 to a dump facility 55 wherein the residues are dumped, or, through 49, to a grinding step 57 and then to a step 50 of production of ammonium nitrate by means of nitric acid. The so treated mass is then fed to a drying step 56, in which the drying heat is supplied by the exhaust gases 47 exiting the step 54. The so-dried mass 58 can be directly used in agriculture, as a ternary fertilizer-soil conditioner (N, K, P).

The waste waters 8 which leave the step 6 are sent to a step 9 of catalytic oxidation (carried out in the presence of a catalyst 11), e.g., in a purposely provided basin with impermeable floor and walls, which basin has suitable dimensions for an average stay time of 4 hours.

In such a step an oxydation is carried out with oxygen gas in micro-bubble form injected, e.g., from a system of pipes 10 of plastic matter laid on the floor of the basin and covered by a layer of activated natural material, e.g., a zeolite, such as clinoptilolite, which performs the task of a catalyst capable of supporting and enhancing the oxidative action performed by $O_2$ on the polluting organic substances dissolved in the waste waters. Such a catalytic action is based on phenomena of retention, diffusion and return of $O_2$ to the semi-purified waste waters which soak the granules of clinoptilolite; these latter link -- like an ion-exchange resin -- various cations and anions (such as, e.g., $NH_4^+$), while simultaneously reducing the contents of oxidizable inorganic substances contained in said waste waters (salts, and so forth).

When they leave 9, the waste waters 12 are fed to a step 13 of settling of those settling-capable substances which are formed after the treatment with oxygen, e.g., in a settling basin with water-proof floor and walls having suitable dimensions for an average stay time of 4 hours, whose bottom sludges 15 are partially sent to a step 16 of conditioning and to a step 17 of dehydration; and are partially recycled along the line 18 to the head of the oxidation step 9.

Also the sludges 18 leaving the step 6 can be sent to said steps 16 and 17. The waste waters 19 which leave the step 13 are fed to the phytopurification steps.

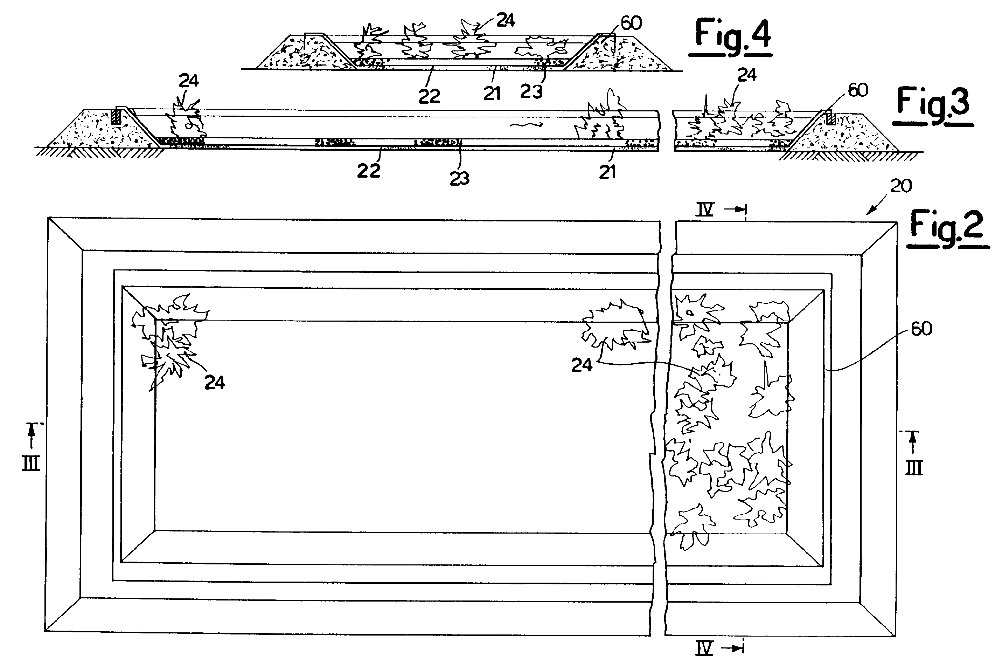

These latter are carried out inside three cells, or basins, or compartments 20, 21 and 22, each of which is shown in greater detail in Figure 2.

Said cells have a rectangular or square plan, and have a rectangular or trapezoidal cross section, are arranged in series (side-by-side to each other, with their sides parallel to the waste wasters flowing direction, or their sides perpendicular to said flowing direction being close to each other, as shown in Figure 1, or according to different combinations); they can be made from concrete, either as prefabricated elements, or by being cast in situ; with greater advantage, if the local conditions so allow, the cells are obtained by excavating the ground, as deeply as necessary, in order to obtain relieved embankments 49, as shown in Figure 2.

Referring to said Figure 2, a cell 20 with a rectangular plan and a trapezoidal cross section has earthen floor and earthen walls -- with floor and walls earth being suitably tamped, coated with a layer 21 of also tamped sand, above which a sheet 22 of an impermeable plastic material, of black colour for the purposes of a better heat absorption, non toxic, resistant to the atmospheric agents, and of thin thickness, is laid. Above the sheet 22 a layer 23 of gravel mixed with clinoptilolite zeolite is laid (with said layer 23 having a thickness of about 10 cm). On this latter layer 23 the vegetable species 24 which constitute the purification improving system are rooted; they are constituted by plants of Iris, Typhaceae, Scirpus, Phragmites species, with the number of said plants and their distribution being a function of the type of waste waters to be treated, of the dimensions of the same treating cell, and of the characteristics of the adopted vegetable species. For example, if we define the Iris plants as (a), the Phragmites plants as (b), the Scirpus plants as (c), and the plants belonging to other species as (n), the following combinations can be adopted: (a)(a)(a); (a)(b)(c); (b)(a)(a); n(a)(b), and so forth, according to the indications obtained from the laboratory pilot facility, and obviously as a function of the characteristics of the waste waters to be treated; the average density will be of 5 plants per square meter.

Each one of the three cells 20, 21 and 22 is composed by three compartments 25, 26 and 27, which are so connected as to make it possible, by means of the suitable operation of sluice-gates 30, each one of said cells, as well as each one of the three compartments into which each cell is subdivided, to be excluded according to a whatever desired pattern of progression and combination, as shown by the flow lines from 31 to 39.

The waste waters 28 submitted to phytopurification run then through the step 29 of slow filtration on a bed constituted by sand and activated material of natural origin, such as a zeolite of phillipsite type, of clinoptilolite type and -- in case the analysis still shows a further presence of chlorinated organics, plant protection products, and so forth -- also by multilayer filters also comprising other selective filtering materials, such as celite and dicalite or activated charcoal.

The purified waste waters 40 which leave the step 29 are finally collected inside a reservoir 41, ready for being used again. The exhausted filtering mass coming from the step 29 can be fed through the line 51 directly to the dump facility where the residues 55 are dumped, or to the grinding step 57.

The solid residues 42 from the phytopurification constituted by the biomass of a portion of the vegetable species which ended their life cycle (3-4 years), once removed from the cells are disposed off by being treated in an anaerobial fermentation facility from which biogas can be derived for several uses. For this reason, in Figure 1 a flow line 43 is shown, which goes to the residues dump facility, from which a line 52 leaves, which corresponds to the obtainable biogas.

The solid residues constituted by the mass of activated minerals of natural origin and used in the head and tail sections, suitably conditioned as a function of the retained substances, are converted into products useable in the normal agronomical practice or, in case such an use is impossible, they are disposed off in mixture with vegetable residues, by being discharged into a suitable dump facility.

Generally speaking, as regards the step of phytopurification provided according to the process of the instant invention, each one of the cells should advantageously be given such a width that the ratio of the flowrate of the entering waste waters (ms/second) to the cross-section surface-area defined by such width and by the level of the free liquid surface from the floor of the cell, to be established as a function of the vegetable species used, is equal to the flowing speed of the waste waters, also pre-determined mainly as a function of the available surface areas and of the environmental conditions; with each one of said cells being furthermore given such a length that the compartments it is subdivided into can be run through by said waste waters within an average time of 36 hours.

As a rule, the waste waters which enter the phyto cells should show acceptable values of the pollution indexes (pH value, BOD, COD, settling substances, colour, mineral salts, heavy metals, solvents, and so forth), according to the regulations in force (C Table, Law 319/76 and subsequent integrations and modifications). Loads of polluting substances largely exceeding the acceptable values shall have to be suitably corrected at the head section.

In particular, in order to safeguard the phytopurification systems, in case of arrivals of incompatible waste waters (pH values lower than 5 and higher than 10, presence of large amounts of oxidizer substances, reducing substances, mineral oils, high saltiness, and so forth), specific sensors (pH-meter, redox, $O_2D$, electrical conductivity measuring instruments, and so forth) detect the anomalies and automatically divert the stream of waste waters towards a guard basin equipped with skimmers for blocking the floating oily wastes and with apparatuses capable of also automatically correcting the pH value, of oxidating the waste waters, and the like.

The facility suitable for practically embodying the process according to the present invention can be made, besides the manually-controlled version, also as a computer-controlled version, including a network of specific sensors installed at the facilities and connected with local microprocessors, with the data being transmitted to a remote central control unit capable of automatically putting into effect the logics of management of the facilities with reference to the physical and chemical characteristics of the waste waters, to the hydraulic steady-state conditions, to the basins, to the state of the phytopurifying filters, and so forth.

Inasmuch as the level of refinement which can be reached at the phytopurification step is a function of the stay times of the waste waters and hence of their flowing speeds -- and consequently of the height of the liquid mass, the geometric dimensions of the cells, the calibrations of the inlet and outlet sills of the cells (in case the waste waters are caused to move by gravity) can be defined as a function of the entering flowrate, of the characteristics of the waste waters and of the vegetable species necessary for the phytopurification.

Furthermore, the use of such auxiliary devices as distribution channels at the head side and of collection channels at the tail side; branchings and by-pass channels necessary for drying the phytocell compartments, in case of ordinary or extra-ordinary maintenance; and the adoption of special measures, such as the use of strong nets of non-toxic plastic materials on the top of the layer of gravel and clinoptilolite-zeolite in which the used vegetable species take root -- in order to make it possible portions of the vegetables to be easily removed by using adequate mechanical means, in case the vegetable system has to be replaced or restored -- is possible as well.

The waste waters purified by means of the process according to the instant invention can be used again in industries, in agriculture, in pisciculture, without polluting substances being cycled into the alimentary chain, or nourishing substances, which may stimulate the growth algae, being fed to the surface water ponds subject to eutrophication.

In order to better understand the advantages of the present invention, a table is reported in the following for exemplifying purposes, in which the composition is reported of the waste waters which enter and leave each one of the various steps of the process of the invention, according to a non-limitative, exemplifying form of practical embodiment.

For the sake of simpleness, the step of anaerobial treatment (6) and the step of catalytic oxidation (9) have been indicated with the same reference numerals as respectively used in the hereinabove disclosed flow diagram of Figure 1.

It should be understood that such steps can anyway be performed otherwise than as disclosed in said example, which in no way should be construed as being limitative of the scope of the invention.

TABLE

| | Incoming waste waters | Outlet from Step 6 | Outlet from Step 9 | Outlet from Phytopurification Step | | Filtration Step Outlet |
| --- | --- | --- | --- | --- | --- | --- |
| | | | | after 36 h | after 72 h | |
| pH value | 7.2 | 7.5 | 7.6 | 7.3 | 7.8 | 7.9 |
| SS Settling solids ml/l | 8 | 5 | not detectable | not detectable | not detectable | absent |
| $SS_T$ mg/l | 450 | 400 | 160 | 38 | 30 | absent |
| BOD | 600 | 60 | 50 | 10 | 10 | -- |
| COD | 5,000 | 500 | 320 | 124 | 90 | 68 |
| Chlorides | 350 | 320 | 320 | 105 | 80 | 70 |
| Sulfates | 610 | 600 | 600 | 160 | 140 | 120 |
| Nitrates ($NO_3$) | 250 | 230 | 250 | 60 | 40 | 34 |
| Phosphates (P) | 18 | 15 | 14 | 2.2 | 0.7 | 0.1 |
| Ammoniacal N | 300 | 115 | 60 | -- | -- | absent |
| Nitrous N | 10 | 6 | absent | -- | -- | absent |
| Phenols | absent | absent | -- | -- | -- | absent |
| Li | 0.6 | 1.6 | 1.6 | 0.4 | 0.3 | 0.4 |
| Na | 160 | 160 | 170 | 60 | 60 | 80 |
| K | 440 | 440 | 360 | 120 | 100 | 90 |
| Sulfides | 1 | 5 | -- | -- | -- | -- |

EP 0 390 265 B1

As one can understand from the data reported in the above table, the present invention is capable of efficaciously accomplishing the initially declared purposes.

## Claims

1. Process for purifying the waste waters constituted by civil, industrial, agroalimentary, and zootechnical, waste waters, characterised in that it comprises the following steps, in succession:
   (a) anaerobial fermentation of said waste waters;
   (b) oxidation of said waste waters with oxygen in the presence of a catalyst;
   (c) phytopurification by causing said waste waters to flow through one or more cell(s) inside which plants are contained, which are not completely under the surface of the stream of waste waters flowing through said cell(s), but at least partially emerge from said stream;
   (d) filtration of said waste waters in the presence of zeolite.

2. Process according to claim 1, characterised in that it comprises a further step, to be carried out before said (a), (b), (c) and (d) steps, consisting in that said waste waters are submitted to a treatment in order to displace the ammonia contained in them.

3. Process according to claim 1, characterised in that it comprises the following steps in succession:
   (a') displacement of ammonia from said waste waters;
   (a") anaerobial fermentation of said waste waters;
   (a) oxidation of said waste waters with oxygen in the presence of a catalyst;
   (b) phytopurification by causing said waste waters to flow through one or more cell(s) inside which plants are contained, which are not completely under the surface of the stream of waste waters flowing through said cell(s), but at least partially emerge from said stream;
   (c) filtration of said waste waters in the presence of zeolite.

4. Process according to claim 1, characterised in that the plants used in said (c) step are selected from among the non-infesting shrubby vegetable species provided with a rhizoma or a root apparatus.

5. Process according to claim 4, characterised in that said vegetable species are selected from among the following: Iris, Typhacease, Scripus, Phragmites, either as individual species, or in association with one another.

6. Process according to claim 1, characterised in that in said (b) step said catalyst is a zeolite.

7. Process according to claim 1, characterised in that in said (d) step said zeolite is either phillipsite or clinoptilolite.

8. Process according to claim 1, characterised in that in said (d) step further filtering materials are present, such as celite, dicalite, activated charcoal.

9. Plant for working a process according to one or more of the preceding claims, characterised in that it comprises in succession an anaerobial fermentation station (6), a catalytic oxidation station (9), a phytopurification station made of cells (20, 21,22) containing plants (24),and a filtration station (29) containing zeolite.

## Patentansprüche

1. Verfahren zur Reinigung von Kommunal-, Industrie-, Landwirtschafts-, Ernährungs- und Tierzuchtabwässern, dadurch gekennzeichnet, daß es die folgenden Schritte in aufeinanderfolgender Reihenfolge umfaßt:
   a) anaerobe Fermentation der Abwässer
   b) Oxidation der Abwässer mit Sauerstoff in Gegenwart eines Katalysators
   c) Phytoreinigung, indem die Abwässer durch eine oder mehrere Zellen fließen gelassen werden, in deren Inneren Pflanzen, welche sich nicht vollständig unter der Oberfläche des Abwasserstromes durch die Zellen befinden, jedoch wenigstens teilweise in den Strom eintauchen,

d) Filtration der Abwässer in Gegenwart von Zeolith.

**2.** Verfahren nach Anspruch 1, dadurch gekennzeichnet, daß es einen weiteren Schritt umfaßt, welcher vor den Schritten a), b), c) und d) durchgeführt wird und darin besteht, daß die Abwässer einer Behandlung unterzogen werden, um den darin enthaltenen Ammonik zu entfernen.

**3.** Verfahren nach Anspruch 1, dadurch gekennzeichnet, daß es die folgenden Schritte in aufeinanderfolgender Reihenfolge umfaßt:

a') Entfernung des Ammoniak aus dem Abwasser

a") anaerobe Fermentation des Abwassers

a) Oxidation des Abwassers mit Sauerstoff in Gegenwart eines Katalysators

b) phytoreinigung indem die Abwässer durch eine oder mehrere Zellen fließen gelassen werden, in deren Inneren Pflanzen, welche sich nicht vollständig unter der Oberfläche des Abwasserstromes durch die Zellen befinden, jedoch wenigstens teilweise in den Strom eintauchen,

c) Filtration der Abwässer in Gegenwart von Zeolith.

**4.** Verfahren nach Anspruch 1, dadurch gekennzeichnet, daß die in Schritt c) verwendeten Pflanzen aus den nicht mit Insekten befallenen Gemüsen mit einem Wurzelstock oder einem Wurzelapparat gewählt wird.

**5.** Verfahren nach Anspruch 4, dadurch gekennzeichnet, daß die Pflanzenspezies aus Iris, Typhacease, Scripus, Phragmites, entweder als Einzelspezies oder in Assoziation miteinander ausgewählt wird.

**6.** Verfahren nach Anspruch 1, dadurch gekennzeichnet, daß der Katalysator von Schritt b) ein Zeolith ist.

**7.** Verfahren nach Anspruch 1, dadurch gekennzeichnet, daß der Zeolith in Schritt d) entweder Phillipsit oder Clinoptilolit ist.

**8.** Verfahren nach Anspruch 1, dadurch gekennzeichnet, daß in Schritt d) weitere Filtermaterialien, wie ein Celit, Dicalit, Aktivkohle vorhanden sind.

**9.** Vorrichtung zur Durchführung des Verfahrens nach einem oder mehreren der vorhergehenden Ansprüche, dadurch gekennzeichnet, daß sie nacheinander eine anaerobe Fermentationsstation (6), eine katalytische Oxidationsstation (9), eine aus Zellen bestehende und Pflanzen (24) enthaltende Phytoreinigungsstation (20,21,22) und eine Zeolith enthaltende Filtrationsstation (29) umfaßt.

## Revendications

**1.** Procédé de purification d'eaux résiduaires constituées par des eaux résiduaires d'origine civile, industrielle, agro-alimentaire ou zootechnique, caractérisé en ce qu'il comporte les étapes suivantes, réalisées successivement :

(a) fermentation anaérobie desdites eaux résiduaires;

(b) oxydation desdites eaux résiduaires avec de l'oxygène, en présence d'un catalyseur;

(c) phytopurification, que l'on réalise en faisant couler lesdites eaux résiduaires à travers une ou plusieurs cellules contenant des plantes qui ne se trouvent pas complètement sous la surface du courant d'eaux résiduaires traversant lesdites cellules, mais émergent au moins partiellement au-dessus dudit courant;

(d) filtration desdites eaux résiduaires en présence d'une zéolite.

**2.** Procédé conforme à la revendication 1, caractérisé en ce qu'il comporte une étape supplémentaire, effectuée avant lesdites étapes (a), (b), (c) et (d), et consistant à soumettre lesdites eaux résiduaires à un traitement permettant d'éliminer l'ammoniac qu'elles contiennent.

**3.** Procédé conforme à la revendication 1, caractérisé en ce qu'il comporte les étapes suivantes, réalisées successivement :

(a') élimination de l'ammoniac desdites eaux résiduaires;

(a") fermentation anaérobie desdites eaux résiduaires;

(a) oxydation desdites eaux résiduaires avec de l'oxygène, en présence d'un catalyseur;

(b) phytopurification, que l'on réalise en faisant couler lesdites eaux résiduaires à travers une ou plusieurs cellules contenant des plantes qui ne se trouvent pas complètement sous la surface du courant d'eaux résiduaires traversant lesdites cellules, mais émergent au moins partiellement au-dessus dudit courant;

(c) filtration desdites eaux résiduaires en présence d'une zéolite.

4. Procédé conforme à la revendication 1, caractérisé en ce que les plantes utilisées dans ladite étape (c) sont choisies parmi les espèces végétales arbustives non envahissantes, munies d'un rhizome ou d'un appareil racinaire.

5. Procédé conforme à la revendication 4, caractérisé en ce que lesdites espèces végétales sont choisies parmi les suivantes : Iris, Typhacease, Scripus, Phragmites, soit seules, soit associées les unes aux autres.

6. Procédé conforme à la revendication 1, caractérisé en ce que, dans ladite étape (b), ledit catalyseur est une zéolite.

7. Procédé conforme à la revendication 1, caractérisé en ce que, dans ladite étape (d), ladite zéolite est une phillipsite ou une clinoptilolite.

8. Procédé conforme à la revendication 1, caractérisé en ce que, au cours de l'étape (d), d'autres matériaux filtrants sont présents, comme de la célite, de la dicalite ou du charbon actif.

9. Installation pour la mise en oeuvre d'un procédé conforme à l'une ou à plusieurs des revendications précédentes, caractérisée en ce qu'elle comprend, disposées successivement, une station (6) de fermentation anaérobie, une station (9) d'oxydation catalytique, une station de phytopurification, constituée de cellules (20, 21, 22) contenant des plantes (24), et une station de filtration (29) contenant une zéolite.

**Fig.1**

EP 0 390 265 B1

## Fig.3

## Fig.2

## Fig.4